# EUROPÄISCHE PATENTANMELDUNG

(11) **EP 1 052 477 A2**
(43) Veröffentlichungstag der Anmeldung: **15.11.2000**
(21) Anmeldenummer: 00109953.0
(22) Anmeldetag: 11.05.2000
(51) Int. Cl.: G01C 9/28

(54) **Wasserwaage für Profilbleche und dergleichen**

(30) Priorität: 11.05.1999 DE 19921563
(71) Anmelder: Aust, Detlef, 46459 Rees-Haldern (DE)
(72) Erfinder: Aust, Detlef, 46459 Rees-Haldern (DE)
(74) Vertreter: Kreutzer, Ulrich (DE)

(57) **Zusammenfassung**

Wasserwaage für Profilbleche u. dgl. mit einem langgestreckten balkenartigen Waagenkorpus und wenigstens einer Libelle.

Beim Aufbau von Hallen u. dgl. aus profilierten Wandelementen (Profilblechen) werden die Wandelemente teilweise überlappend ineinander gelegt und miteinander verschraubt oder vernietet. Dabei sollen die Schrauben oder Nieten exakt waagerechte Linien bilden und sich jeweils in der Mitte einer der als Tiefsicken bezeichneten rinnenartigen Vertiefungen der Wandelemente befindet.

Der Erfindung liegt die Aufgabe zugrunde, eine Wasserwaage anzugeben, mit der das Markieren der Befestigungspositionen der Schrauben oder Nieten auf den Profilblechen o.dgl. schnell und sehr exakt erfolgen kann.

Die Aufgabe wird gelöst von einer Wasserwaage (40) mit einem langgestreckten Waagenkorpus und wenigstens einer Libelle (56), bei welcher wenigstens ein in eine Tiefsicke eines Profilblechs o.dgl. einlegbarer Zentriervorsprung (44) und wenigstens ein, vorzugsweise mehrere Markierungshilfsmittel (46, 48) zum Markieren von Befestigungspunkten in bestimmten Abständen entlang der Wasserwaage vorgesehen sind.

## Beschreibung

Die Erfindung betrifft eine Wasserwaage für Profilbleche u. dgl. mit einem langgestreckten balkenartigen Waagenkorpus und wenigstens einer Libelle.

Spezielle Wasserwaagen für Profilbleche u. dgl. sind bislang nicht bekannt. Die bekannten Wasserwaagen weisen einen im wesentlichen balkenförmigen Waagenkorpus und in der Regel zwei, seltener auch drei Libellen (gebogene mit einer Flüssigkeit unter Einschluß einer Luftblase befüllte und zumindest in einem Teilbereich durchsichtige Röhrchen) auf.

Beim Aufbau von Hallen u. dgl. aus profilierten Wandelementen, insbesondere aus sogenannten Profilblechen (meist Stahltrapezprofile nach DIN 18 807 oder Stahlwellprofile nach DIN 59 231) werden die Wandelemente teilweise überlappend ineinander gelegt und miteinander und ggf. mit einem Stützgerüst verschraubt oder (seltener) auch miteinander vernietet. Dabei sollen die Schrauben oder Nieten nicht nur exakt waagerechte Linien bilden, sondern auch jeweils in der Mitte jeweils einer der als Tiefsicken oder einfach nur als Sicken bezeichneten rinnenartigen Vertiefungen jedes Wandelements ausgerichtet sein.

Nun erfolgt aber die Montage solcher Hallen in der Regel unter großem Zeitdruck, so daß die Schrauben bzw. Nietenreihen sehr schnell gesetzt werden müssen. Bislang wird dabei so vorgegangen, daß ein Wandelement teilweise überlappend in ein benachbartes Element eingelegt und daß sodann mittels eines Stiftes und einer üblichen balkenartigen Wasserwaage in Höhe bereits gesetzter Schrauben oder Nieten die waagerechte Position der zu setzenden Schrauben oder Nieten in den Sicken markiert wird, wobei die mittige Ausrichtung der Befestigungspunkte in den Sicken einfach abgeschätzt wird.

Dieses Vorgehen ist nicht nur an sich "unfachmännisch", da die mittige Position nicht geschätzt, sondern durch Messen exakt ermittelt werden sollte, es bedingt auch mögliche Mängelgewährleistungsansprüche bis hin zur kompletten Nicht-Abnahme einer Halle, wenn die Schrauben- oder Nieten nicht waagerecht in einer Reihe ausgerichtet sind, wozu es nicht nur durch ein mal mehr und mal weniger schräges Ansetzen des zur Markierung verwendeten Stiftes, sondern auch durch nicht exaktes Ausrichten der Wasserwaage an den bereits gesetzten Schrauben oder Nieten leicht kommen kann. Da eine erfahrene Person mit gutem Augenmaß jedoch mit dieser Methode - zumindest solange die Konzentrationsfähigkeit der Person ausreichend hoch ist - hinreichende Arbeitsergebnisse bei vergleichsweise hoher Arbeitsgeschwindigkeit erzielen kann, ist diese Vorgehensweise üblich geworden. Sie erfordert jedoch erfahrenes Personal und bedingt selbst bei Einsatz erfahrenen Personals immer ein großes Risiko ungenauen Arbeitens.

Davon ausgehend liegt der Erfindung die Aufgabe zugrunde, eine Wasserwaage anzugeben, mit der das Markieren der Befestigungspositionen nicht nur sehr schnell, sondern auch sehr exakt erfolgen kann.

Die Aufgabe wird gelöst von einer Wasserwaage mit einem langgestreckten Waagenkorpus und wenigstens einer Libelle, bei welcher wenigstens ein in eine Tiefsicke eines Profilblechs o.dgl. einlegbarer Zentriervorsprung und wenigstens ein, vorzugsweise mehrere Markierungshilfsmittel zum Markieren von Befestigungspunkten in bestimmten Abständen entlang der Wasserwaage vorgesehen sind.

Die Erfindung ermöglicht damit ein sehr schnelles und exaktes Markieren der Befestigungspunkte in einem Profilblech o.dgl., wobei in der einfachsten Ausführungsform für verschiedene Profilbleche verschiedene speziell angepaßte Wasserwaagen vorgesehen sind, deren Zentriervorsprünge dann in Form und Höhe an die Form und Tiefe der jeweiligen Sicken angepaßt sind und deren Markierungshilfsmittel in Anzahl und Abstand der Anzahl und dem Abstand der jeweiligen Sicken entlang einer Wasserwaagenlänge entsprechen.

Wie nachfolgend noch erläutert wird, können vorteilhaft sowohl die Markierungshilfmittel als auch die Zentriervorsprünge verschieblich und/oder austauschbar ausgebildet sein, so daß eine Wasserwaage an unterschiedliche Profile angepaßt werden kann. Insbesondere ist es auch möglich, lediglich ein Markierungshilfsmittel, insbesondere einen Körner zum Ankörnen der Profilbleche an den zu markierenden Stellen vorzusehen und diesen entlang der Wasserwaage verschieblich zu haltern, wobei auf der Wasserwaage dann zweckmäßigerweise an vorbestimmten Stellen Rastpunkte o.dgl. vorgesehen sind, welche es erlauben, den Körner o.dgl. schnell an vorbestimmten Stellen entlang der Wasserwaage zu fixieren. Die Rastpunkte sind dabei dann so gewählt, daß ein an einem Rastpunkt fixiertes Markierungshilfsmittel sich bei korrekter Anlage der Wasserwaage an einem Profilblech so über der in gewünschter Weise zu markierenden Stelle befindet, daß bei Benutzung des Markierungshilfsmittels, also z.B. beim Schlagen auf den Körner die gewünschte Stelle markiert wird. Anschließend wird das Markierungshilfsmittel zum nächsten Rastpunkt verfahren.

Eine solchermaßen ausgebildete Wasserwaage zeichnet sich durch ein besonders geringes Gewicht aus. Da es aber bei der Benutzung der Wasserwaage meist auf Schnelligkeit ankommt, empfiehlt es sich, entlang der Wasserwaage mehrere Markerungshilfsmittel, insbesondere also mehrere Körner vorzusehen.

Als Markierungshilfsmittel können Bohrungen oder Kerben zum Markieren der Befestigungspunkte mittels spitzer Gegenstände oder mittels Schreibgeräten vorgesehen sein. Bei einer besonders vorteilhaften Ausführungsform sind jedoch sog. Körner zum Ankörnen der Befestigungspunkte als Markierungshilfmittel vorgesehen, da mit solchen nagelartigen Körnern der Punkt, an dem zunächst eine Bohrung in das Profilblech o.dgl. und später eine Schraube oder Niete einzubringen ist, nicht nur schnell und exakt markiert, sondern zugleich eine Vertiefung in die in der Regel mit einem Schutzüberzug, z.B. einer wetterfesten Lackierung versehene Oberfläche des jeweiligen Profilblechs o.dgl. eingebracht werden kann, welche vorteilhaft ein Abrutschen des zum Einbringen der Bohrung verwendeten Bohrers und damit ein Zerkratzen und Verletzen des Schutzüberzugs verhindert.

Die Körner können in Richtung auf die jeweils bearbeiteten Profilbleche o dgl. beweglich gehaltert sein und zumindest im nicht in Richtung auf ein Profilblech bewegten Zustand auf der dem Profilblech abgewandten Seite der Wasserwaage vorspringen, so daß sie z.B. mit einem Gummihammer nach Ausrichten der Wasserwaage mit der spitzen Seite kurz gegen das jeweilige Profil geschlagen werden können, um so die Befestigungspunkte zu markieren.

Zweckmäßigerweise werden dabei die Körner zu der beim Arbeiten mit der Wasserwaage dem jeweiligen Profilblech abgewandten Seite der Wasserwaage hin mittels einer Feder o.dgl. vorgespannt, so daß die spitze Seite der Körner in der Grundstellung nicht aus der Wasserwaage herausragt, wodurch sowohl Verletzungen der mit der Wasserwaage arbeitenden Person als auch ein unbeabsichtigtes Zerkratzen oder Markieren eines Profils vermieden werden können.

Da die Körner im Laufe des Gebrauchs stumpf werden können, sind sie bei einer vorteilhaften Ausführungsform der Wasserwaage austauschbar gestaltet.

Bei einer bevorzugten Ausführungsform ist zudem wenigstens eine Ausrichtaufnahme zur Aufnahme eines in einer Tiefsicke eines Profilblechs o.dgl. vorstehenden Schrauben- oder Nietenkopfes vorgesehen, mittels welcher ein besonders schnelles und exaktes Arbeiten mit der Wasserwaage möglich wird und ein Höhenversatz einer entlang der Länge der Wasserwaage markierten Befestigungspunkte gegenüber der bereits gesetzten Reihe benachbarter Schrauben oder Nieten ausgeschlossen ist, da die Ausrichtaufnahme vor dem Markieren der Befestigungspunkte über den Kopf einer bereits gesetzten Schraube oder Niete geschoben wird und so zusammen mit der Libelle die exakt waagerechte Reihung der Schrauben und Nieten erlaubt.

Die Ausrichtaufnahme kann zweiteilig ausgebildet sein und aus einer am Waagenkorpus vorgesehenen, z.B. direkt am Korpus angeformten Halterung und einem in die Halterung einsetzbaren Aufnahmeteil bestehen, wobei dann verschiedene, an unterschiedliche Schrauben- und Nietenköpfe speziell angepaßte Aufnahmeteile zur Verfügung gestellt werden können.

Das Aufnahmeteil kann auch drehbar und in verschiedenen Positionen feststellbar in der Halterung gelagert sein und verschiedene Aufnahmeöffnungen für unterschiedliche Schrauben- oder Nietenköpfe aufweisen.

Die Libelle kann in einer am Waagenkorpus befestigten Halterung drehbar und in zumindest zwei Richtstellungen feststellbar gelagert sein, so daß mit einer Libelle sowohl die waagerechte als auch die senkrechte Ausrichtung geprüft werden kann.

Alternativ oder zusätzlich kann die zur waagerechten Ausrichtung des langgestreckten Waagenkorpus vorgesehene Libelle derart ausgebildet sein, daß der Waagenkorpus in zwei um 180° zueinander gedrehten waagerechten Positionen ausgerichtet werden kann. Dazu kann die Libelle sowohl zweiteilig ausgebildet sein und aus zwei um 180° zueinander versetzten Teillibellen bestehen, als auch ein einen Winkel von mehr als 180° umschließendes Röhrchen mit einer Luftblase und zwei um 180° zueinander versetzten Ausrichtmarkierungen aufweisen oder um 180° schwenkbar am Waagenkorpus gelagert sein. Mit einer solchermaßen ausgebildeten Wasserwaage muß nicht wie bei herkömmlichen Wasserwaagen darauf geachtet werden, daß die Waage derart angelegt wird, daß die Ausrichtmarkierungen der Libelle nach oben weisen. Zudem kann in den Fällen, in denen an einem Endbereich der Wasserwaage eine Ausrichtaufnahme für einen Schrauben- oder Nietenkopf vorgesehen ist, sowohl von links nach rechts als auch von rechts nach links gearbeitet werden.

Als "dritte Hand" beim Markieren kann die Wasserwaage wenigstens eine Magnethalterung zur Halterung der Wasserwaage an einem Profilblech o.dgl. aufweisen, wobei die Magnethalterung einen mittels eines Hebels, eines Druckknopfes o.dgl. in Richtung auf ein gerade bearbeitetes Profilblech bzw. von diesem Blech weg beweglichen Magneten umfassen kann. Die mit dem jeweils bearbeiteten Profil in Kontakt tretenden Teile der Magnethalterung können - ebenso wie zumindest auch die vorspringenden, mit dem jeweils bearbeiteten Profilblech o.dgl. in Kontakt tretenden Teile des Waagenkorpus - mit einem lackschonenden Überzug versehen sein.

Die Markierungshilfsmittel, insbesondere die Körner, können längsverschieblich und in verschiedenen Positionen feststellbar am Waagenkorpus gelagert sein.

Der Waagenkorpus kann von einer Rahmenkonstruktion gebildet werden, an der der Zentriervorsprung und die Markierungshilfsmittel sowie gegebenenfalls weitere Zentriervorsprünge und eventuell auch die Libelle in unterschiedlichen Positionen befestigbar sind.

Als zweckmäßig hat es sich erwiesen, wenigstens zwei an das Profil des jeweils zu bearbeitenden Profilblechs o.dgl. angepaßte Zentriervorsprünge vorzusehen.

Die Zentriervorsprünge können auswechselbar am Waagenkorpus gehaltert und am Waagenkorpus kann wenigstens ein Haltegriff vorgesehen sein.

Weitere Einzelheiten und Vorteile der Erfindung ergeben sich aus der nachfolgenden Beschreibung dreier Ausführungsbeispiele in Verbindung mit der Zeichnung. Es zeigen:
- Fig. 1: ein erstes Ausführungsbeispiel einer erfindungsgemäßen Wasserwaage im an ein Trapezblech angelegten Zustand,
- Fig. 2: die Wasserwaage gemäß Fig. 1 in Rückansicht,
- Fig. 3: einen Abschnitt der in eine vertikale Sicke eines Trapezblechs senkrecht eingelegten Wasserwaage gemäß Fig. 1,
- Fig. 4: ein zweites Ausführungsbeispiel einer erfindungsgemäßen Wasserwaage in perspektivischer Gesamtansicht,
- Fig. 5: einen bei der Wasserwaage gemäß Fig. 4 verwendeten Körner im Längsschnitt,
- Fig. 6: die um 180° schwenkbare Libelle zur waagerechten Ausrichtung der Wasserwaage gemäß Fig. 4 im Längsschnitt,
- Fig. 7: eine bei einer Wasserwaage gemäß Fig. 1 oder Fig. 4 verwendbare Magnethalterung im Längsschnitt und
- Fig. 8: ein Ausführungsbeispiel einer Wasserwaage mit verschieblichen Körnern und austauschbaren Zentriervorsprüngen.

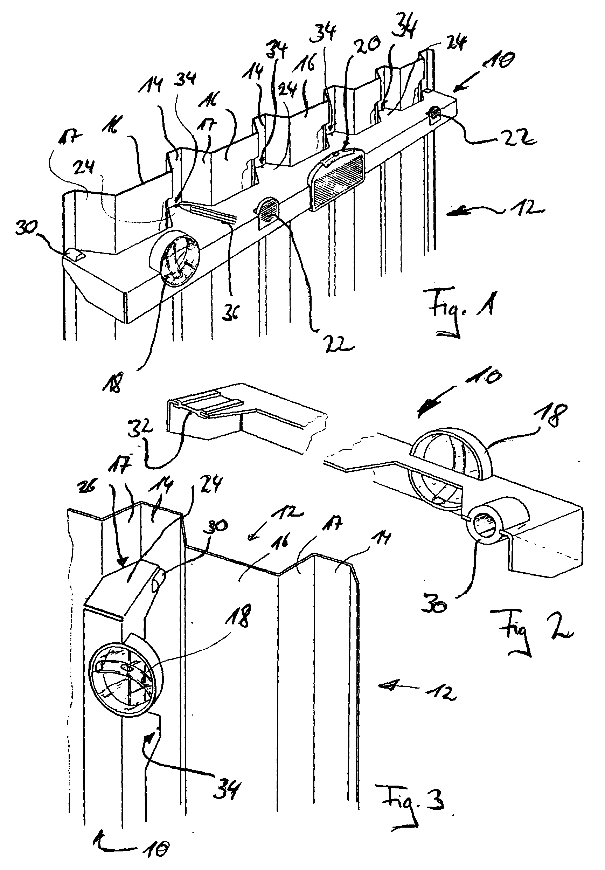

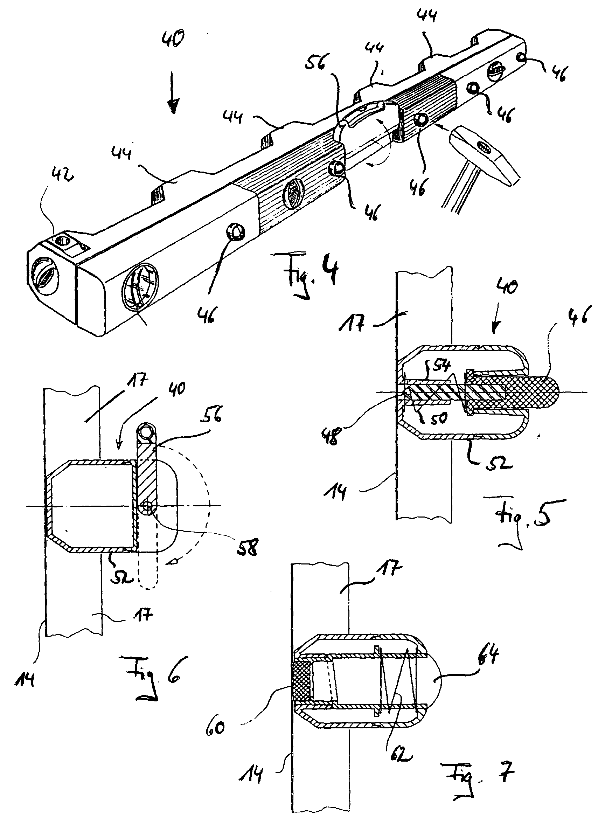

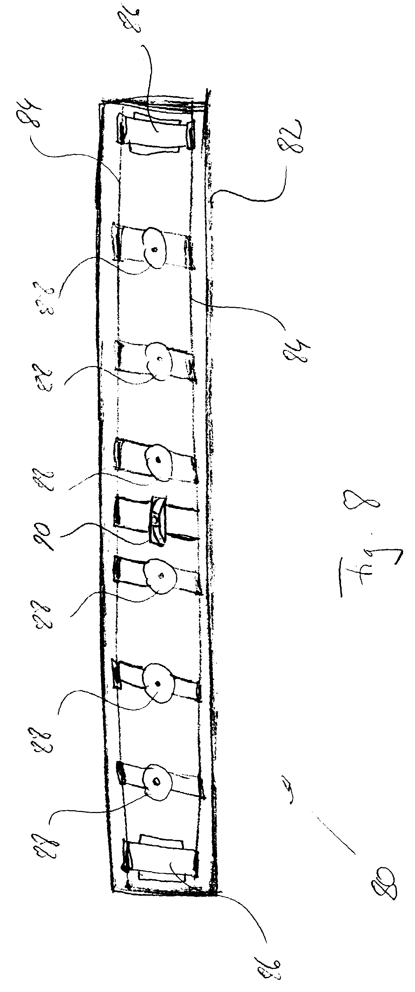

In den Figuren 1 und 3 ist eine in ihrer Gesamtheit mit 10 bezeichnete Wasserwaage für ein spezielles Trapezblech 12 gezeigt, wobei das Trapezblech 12 eine Vielzahl von meist als "Tiefsicken" bezeichneten, von der Außenseite z.B. einer aus Profilblechen montierten Halle als Vertiefungen wahrgenommenen parallelen vertikalen Rinnen und dazwischen angeordneten, meist als "Hochsicken" bezeichneten, von der Außenseite als Vorsprünge wahrgenommenen Profilabschnitten besteht. Die Tief- und Hochsicken werden dabei von den in zwei Ebenen parallel zueinander verlaufenden Profilstreifen 14 und 16 und den jeweils einen zurückgesetzten Profilstreifen 14 mit einem vorspringenden Profilstreifen 16 verbindenden Seitenwangen 17 gebildet. Die Profilstreifen 14 bilden also den Boden einer Tiefsicke; die Seitenwangen 17 stellen gleichzeitig die Seitenwände von Tief- und Hochsicken dar. Um die Ansicht auf die Wasserwaage 10 freizugeben, wurde das Trapezblech an den entsprechenden Stellen in der Zeichnung aufgebrochen.

Die Wasserwaage weist zwei Libellen 18 und 20 auf, wobei die Libelle 18 zur senkrechten, die Libelle 20 zur waagerechten Ausrichtung dient. Ferner sind zwei Magnethalterungen vorgesehen, wobei die Magnete der Halterungen mittels der schwenkbaren Betätigungshebel 22 auf das Profilblech 12 zu und wieder von diesem weg bewegt werden können.

Die Wasserwaage weist ferner eine Anzahl von speziell an das Profil 12 angepaßten Zentriervorsprüngen 24 auf, wobei eine Flanke 26 der Zentriervorsprünge derart ausgebildet ist, daß sie auch exakt an eine Seitenwand 17 einer Tiefsicke des Profils 12 angelegt werden kann (Fig. 3).

Zur Aufnahme von Schrauben- oder Nietköpfen in der oben genannten Weise dient eine Ausrichtaufnahme, die bei diesem Ausführungsbeispiel ein Aufnahmeteil 30 und eine integral am Waagenkorpus angeformte Halterung, in die das Aufnahmeteil 30 eingeschoben werden kann, umfaßt. Um mit der Waage sowohl von links nach rechts als auch von rechts nach links arbeiten zu können, ist eine zweite Halterung am gegenüberliegenden Ende der Waage angeformt, in die beim gezeigten Beispiel ein Abdeckteil 32 eingesteckt ist. Soll nun von rechts nach links gearbeitet werden, werden Abdeckteil 32 und Aufnahmeteil 30 miteinander vertauscht.

Als Markierungshilfsmittel sind bei diesem Ausführungsbeispiel an den zwischen dem ernten und dem letzten Zentriervorsprung 24 befindlichen Zentriervorsprüngen 24 Vertiefungen in Form kleiner Kerben 34 vorgesehen, die es erlauben, z.B. mittels eines in Fig. 1 angedeuteten Stiftes 36 Markierungspunkte an exakt ausgerichteten Stellen auf dem Boden 14 jeder Tiefsicke anzuzeichnen.

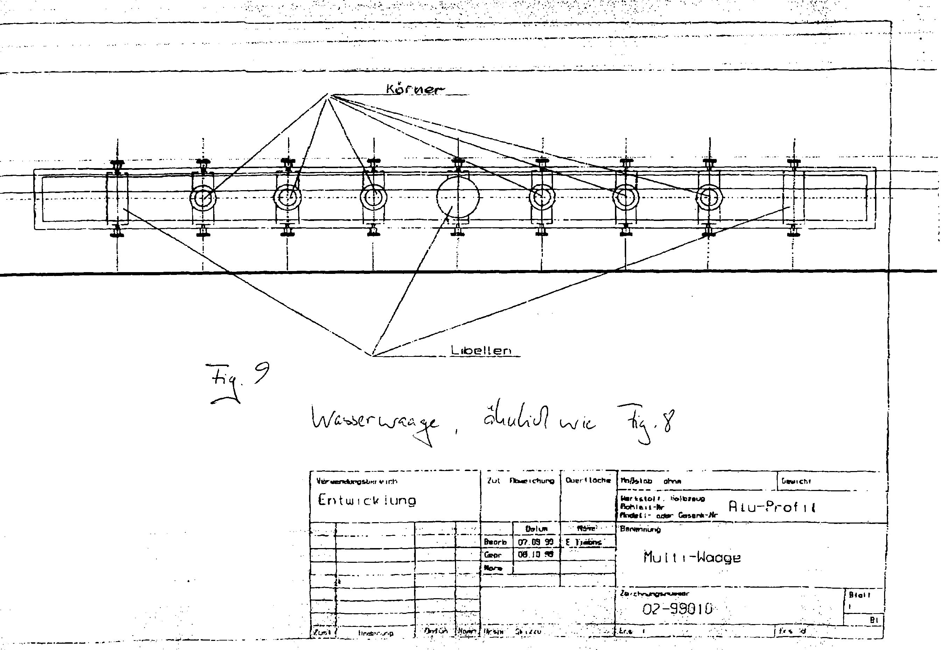

Fig. 4 zeigt ein gegenüber dem in den Fig. 1 bis 3 gezeigten Beispiel abgewandeltes Ausführungsbeispiel einer erfindungsgemäßen Wasserwaage 40, bei der die Ausrichtaufnahme ein drehbar gelagertes Aufnahmeteil 42 mit unterschiedlichen Aufnahmeöffnungen zur Aufnahme unterschiedlicher Schrauben- oder Nietenköpfe umfaßt. Zur Markierung der Befestigungspunkte sind bei diesem Ausführungsbeispiel an vordefinierten Stellen, nämlich jeweils in der Mitte der Zentriervorsprünge 44, Körner vorgesehen, von denen in Fig. 4 nur die Schlagköpfe 46 zu sehen sind, die aus der den Zentriervorsprüngen 44 abgewandten Wasserwaagenseite herausragen.

Fig. 5 zeigt einen Schnitt durch die an ein Profilblech angelegte Wasserwaage 40 im Bereich eines aus Schlagkopf 46 und nagelartigem Markierungsstift 48 bestehenden Körners, wobei der Markierungsstift 48 durch eine gegen den Schlagkopf 46 drückende Schraubenfeder 50 gegen die Schlagrichtung vorgespannt und in eine im zweiteilig ausgebildeten Gehäuse 52 der Wasserwaage 40 gebildete Aufnahme 54 zurückgezogen ist. Würde nun z.B. mit einem Gummihammer auf den Schlagkopf 46 geschlagen, so träte die Spitze des Markierungsteils 48 aus der Aufnahme 54 hervor und körnte den den Boden einer Tiefsicke bildenden Profilstreifen 14 an. Dabei hat das Ankörnen gegenüber dem Anzeichnen den Vorteil, daß die beim Ankörnen in dem Profilstreifen 14 gebildete Vertiefung oder gar Öffnung ein Abrutschen eines zum Einbringen einer Befestigungsbohrung verwendeten Bohrers von der markierten Stelle verhindert.

Die Fig. 6 zeigt eine Schnittansicht der Wasserwaage 40 im Bereich der zur waagerechten Ausrichtung dienenden Libelle 56, die bei diesem Ausführungsbeispiel um eine Achse 58 schwenkbar am zweiteilig ausgebildeten Gehäuse 52 der Wasserwaage 40 angelenkt ist. Wiedergegeben sind in der Fig. 6 ferner der den Boden einer Tiefsicke bildende Profilstreifen 14 sowie die Seitenwand einer Sicke 17 eines Profilblechs. Da bei der Wasserwaage 40 - wie in Fig. 4 gezeigt - eine Ausrichtaufnahme zur Aufnahme des Kopfes einer bereits gesetzten Niete oder Schraube nur an einem Ende der Wasserwaage vorgesehen ist, muß die Wasserwaage beim Arbeiten von links nach rechts in einer anderen Stellung gehalten werden als beim Arbeiten von rechts nach links. Durch die schwenkbare Ausgestaltung der zur waagerechten Ausrichtung dienenden Libelle 56 muß bei diesem Ausführungsbeispiel einer Wasserwaage nur eine einzige Libelle zur waagerechten Ausrichtung vorgesehen werden, die dann in die entsprechend benötigte Position geschwenkt werden kann.

Die Fig. 7 zeigt eine bei erfindungsgemäßen Wasserwaagen verwendbare Magnethalterung im Längsschnitt. Dabei ist der Magnet 60 mittels eines durch eine Feder 62 vorgespannten Druckknopfes 64 auf einen Abschnitt eines Profilbleches, z.B. auf den den Boden einer Tiefsicke bildenden Profilstreifen 14 zu und wieder von diesem weg bewegbar und in zwei Raststellungen verrastbar. Eine solche Magnethalterung läßt sich an beliebigen Stellen entlang einer Wasserwaage 40 vorsehen. Dabei kann die Magnethalterung so ausgebildet sein, daß sie an einer Tiefsicke, einer Hochsicke oder einer Seitenwand angreift.

Die Fig. 8 zeigt ein besonders vorteilhaftes Beispiel einer Wasserwaage 80, bei der Waagenkorpus von einer Rahmenkonstruktion 82 gebildet wird, in der zwei Führungsschienen 84 vorgesehen sind. An den Führungsschienen sind zwei Zentriervorsprünge 86, mehrere Körner 88 sowie eine Libelle 90 austauschbar und verschieblich befestigt, so daß mit einer solchen Universalwaage durch Verwendung entsprechend ausgebildeter Zentriervorsprünge und einer entsprechenden Anzahl von Körnern die Befestigungspunkte bei den unterschiedlichsten Profilen markiert werden können.

Im Rahmen des Erfindungsgedankens sind zahlreiche Abwandlungen und Weiterbildungen möglich, die sich z.B. auf die Ausgestaltung des Zentriervorsprunges und die Anzahl und Ausbildung der Markierungshilfmittel beziehen. So ist es z.B. möglich, anstelle der beispielhaft gezeigten Kerben (Fig. 1) und Körner (Fig. 4) Öffnungen in der Wasserwaage vorzusehen, durch welche z.B. ein Filzstift geführt werden kann. Erfindungswesentlich ist jedenfalls, daß an der Wasserwaage wenigstens ein in eine Tiefsicke eines Profilblechs oder dergleichen einlegbarer Zentriervorsprung vorgesehen ist und daß wenigstens ein beliebig gestaltetes Markierungshilfsmittel zum Markieren von Befestigungspunkten auf dem Profilblech in bestimmten Abständen entlang der Wasserwaage vorgesehen ist.

## Patentansprüche

1. Wasserwaage für Profilbleche u. dgl. mit einem langgestreckten Waagenkorpus und wenigstens einer Libelle,
dadurch gekennzeichnet,
daß wenigstens ein in eine Tiefsicke eines Profilblechs o.dgl. einlegbarer Zentriervorsprung vorgesehen ist und
daß wenigstens ein, vorzugsweise mehrere Markierungshilfsmittel zum Markieren von Befestigungspunkten auf dem Profilblech vorgesehen sind.

2. Wasserwaage nach Anspruch 1, dadurch gekennzeichnet, daß wenigstens eine Ausrichtaufnahme zur Aufnahme eines in einer Tiefsicke eines Profilblechs o.dgl. vorstehenden Schrauben- oder Nietenkopfes vorgesehen ist.

3. Wasserwaage nach Anspruch 2, dadurch gekennzeichnet, daß die Ausrichtaufnahme zweiteilig ausgebildet ist und aus einer am Waagenkorpus vorgesehenen Halterung und einem Aufnahmeteil besteht.

4. Wasserwaage nach Anspruch 3, dadurch gekennzeichnet, daß das Aufnahmeteil drehbar und in verschiedenen Positionen feststellbar in der Halterung gelagert ist und verschiedene Aufnahmeöffnungen für unterschiedliche Schrauben- oder Nietenköpfe aufweist.

5. Wasserwaage nach einem der Ansprüche 1 bis 4, dadurch gekennzeichnet, daß wenigstens eine Libelle in einer am Waagenkorpus befestigten Halterung drehbar oder schwenkbar und in zumindest zwei Positionen feststellbar gelagert ist.

6. Wasserwaage nach einem der Ansprüche 1 bis 5, dadurch gekennzeichnet, daß wenigstens eine Magnethalterung zur Halterung der Wasserwaage an einem Profilblech o.dgl. vorgesehen ist.

7. Wasserwaage nach einem der Ansprüche 1 bis 6, dadurch gekennzeichnet, daß das oder die Markierungshilfsmittel Bohrungen oder Kerben zum Markieren der Befestigungspunkte mittels spitzer Gegenstände oder mittels Schreibgeräten umfaßt bzw. umfassen.

8. Wasserwaage nach einem der Ansprüche 1 bis 7, dadurch gekennzeichnet, daß das oder die Markierungshilfsmittel wenigstens einen nagelartigen Körner zum Ankörnen der Befestigungspunkte umfaßt bzw. umfassen.

9. Wasserwaage nach einem der Ansprüche 1 bis 8, dadurch gekennzeichnet, daß der Zentriervorsprung und/oder das oder die Markierungshilfsmittel sowie gegebenenfalls weitere Zentriervorsprünge in unterschiedlichen Positionen entlang der Wasserwaage fixierbar sind.

10. Wasserwaage nach einem der Ansprüche 1 bis 9, dadurch gekennzeichnet, daß der Waagenkorpus von einer Rahmenkonstruktion gebildet wird, an der ein oder mehrere Zentriervorsprung/-vorsprünge und/oder das oder die Markierungshilfsmittel vorzugsweise austauschbar und insbesondere längsverschieblich fixierbar sind.

11. Wasserwaage nach einem der Ansprüche 1 bis 10, dadurch gekennzeichnet, daß wenigstens zwei an das Profil des jeweils zu bearbeitenden Profilblechs o.dgl. angepaßte Zentriervorsprünge vorgesehen sind.

12. Wasserwaage nach einem der Ansprüche 1 bis 11, dadurch gekennzeichnet, daß der Zentriervorsprung oder die Zentriervorsprünge sowohl zur waagerechten Anlage der Wasserwaage quer zu den im wesentlichen vertikal verlaufenden Sicken des jeweilgen Profilblechs o.dgl. als auch zur vertikalen Anlage der Wasserwaage entlang einer im wesentlichen vertikal verlaufenden Seitenwange einer Sicke ausgebildet ist bzw. sind.
